# EUROPEAN PATENT SPECIFICATION

(11) **EP 1 977 544 B1**
(45) Date of publication and mention of the grant of the patent: **22.05.2019**
(21) Application number: 07707366.6
(22) Date of filing: 18.01.2007
(51) Int. Cl.: H04L 5/02, H04L 27/26, H04J 11/00

(54) **METHOD AND SYSTEM FOR SUPPORTING SCALABLE BANDWIDTH**
VERFAHREN UND SYSTEM ZUR UNTERSTÜTZUNG EINER SKALIERBAREN BANDBREITE
PROCÉDÉ ET SYSTÈME DE SUPPORT DE BANDE PASSANTE ÉVOLUTIVE

(30) Priority: 18.01.2006 AU 2006900261; 12.01.2007 AU 2007200144
(43) Date of publication of application: 08.10.2008
(73) Proprietor: NEC Corporation, Minato-ku Tokyo 108-8001 (JP)
(72) Inventor: BUI, Thanh, Victoria, 3170 (AU); VASIC, Dobrica, Victoria, 3170 (AU)
(74) Representative: Vossius & Partner Patentanwälte Rechtsanwälte mbB
(86) International application number: PCT/JP2007/051119
(87) International publication number: WO 2007/083836

(56) References cited:
- EP-A1- 1 940 059
- WO-A1-03/058871
- WO-A1-2005/074178
- WO-A1-2005/096522
- JP-A- 2003 249 908
- JP-A- 2003 513 531
- JP-A- 2005 252 786
- JP-A- 2005 519 567
- CHEONG YUI WONG ET AL: "Multiuser OFDM with Adaptive Subcarrier, Bit, and Power Allocation", IEEE JOURNAL ON SELECTED AREAS IN COMMUNICATIONS, IEEE SERVICE CENTER, PISCATAWAY, US, vol. 17, no. 10, 1 October 1999 (1999-10-01), XP011055027, ISSN: 0733-8716

## Description

### Field of the invention

The present invention relates to methods and systems for supporting scalable bandwidth in radio telecommunications networks. In a preferred embodiment the present invention provides methods for use in a transmitter of a base station (BTS) and in a receiver of a user equipment(UE) of a radio telecommunications network employing orthogonal frequency division multiple access (OFDMA).

### Background of the invention

To meet an anticipated increase in user demand for high data rate and improved service quality in the future, the 3GGP has identified that it will be desirable to develop new networks for deployment in the medium to long term that provide data rates of up to 100 MBPS in the downlink direction and 50 MBPS in the uplink direction. In order to achieve this increased data rate with acceptable quality such networks will implement OFDMA and have a maximum downlink transmission bandwidth of 20 MHz.

Notwithstanding the desired 20MHz peak bandwidth criterion set out above, it is likely that for one reason or another cells with lower bandwidth such as 5 MHz, 10 MHz, 15 MHz, or even 1.25 MHz or 2.5 MHz will also exist. These lower bandwidths may arise, for example, because during the deployment phase of the network not all cells will be upgraded to the full 20 MHz capacity at the same time, or due to spectrum availability restrictions only a narrow bandwidth radio spectrum is available for transmission in a particular area.

It is also desirable that UEs (user equipment) having different reception capabilities, i.e. maximum reception bandwidths that UE can support, can communicate with such networks. As will be appreciated, higher capability handsets are likely to be more complex and therefore more expensive, and thus some users will be willing to trade off performance to obtain a cheaper handset.

Accordingly, there is a need for systems and methods, to allow UEs of differing reception bandwidths to operate within the network having differing transmission bandwidth, and preferably which facilitate efficient sharing of transmitter bandwidth among the UEs in such circumstances.

WO 2005/074178 and WO 03/058871 are directed to OFDM and represent related art.

### Summary of the invention

The present invention is defined by the features of the claims.

### Brief description of the drawings

Preferred embodiments of the present invention will now be described by way of non-limiting example only with reference to the accompanying drawings, in which:
Figure 1 depicts a schematic diagram of a base station transmitter and two UEs operating in a network according to the present invention;
Figure 2 is a diagram showing transition of the UE between an idle state and an active state in a network operating in accordance with the present invention;
Figure 3 shows various options for mapping bandwidth allocations for UEs having 5 MHz, 10 MHz, 15 MHz and 20 MHz reception capabilities in a 20 MHz bandwidth cell according to an embodiment of the present invention;
Figure 4 shows various options for mapping bandwidth allocations for UEs having 5 MHz, 10 MHz, 15 MHz and 20 MHz reception capabilities in a 15 MHz bandwidth cell according to an embodiment of the present invention;
Figure 5 shows various options for mapping bandwidth allocations for UEs having 5 MHz, 10 MHz, 15 MHz and 20 MHz reception capabilities in a 10 MHz bandwidth cell according to an embodiment of the present invention;

### Detailed description of the embodiments

It will be convenient to describe the preferred embodiments using terminology adopted by the 3GPP, however the present invention should not be considered as being limited to application in networks operating according to a 3GPP standard.

Preferred embodiments of the present invention will now be described in the context of a OFDMA telecommunications network having UEs with 5 MHz, 10 MHz, 15 MHz and 20 MHz reception bandwidth. It is assumed that the maximum reception bandwidth supported by the lowest capability UE in the network is 5 MHz. This is a reasonable assumption as current WCDMA UEs have a 5 MHz reception bandwidth, and it is expected that in the future UEs will at least support this standard. Given this assumption, it should also be realised that the discussion herein is limited to the case where cell bandwidth is 10 MHz or more, since for lower cell bandwidths such as 5 MHz (or below) all UEs will be seen by the network as having the a reception capability equal to the transmission bandwidth of the cell. In the preferred embodiments the parameters for downlink transmission processing are as indicated in Table 1.

**Table 1 - Parameters for downlink transmission scheme in a preferred embodiment**

| Transmissio n BW | 1.25 MHz | 2.5 MHz | *5 MHz* | *10 MHz* | *15 MHz* | *20 MHz* |
|---|---|---|---|---|---|---|
| Sub-frame duration | 0.5 ms | | | | | |
| Sub-carrier spacing | 15 kHz | | | | | |

| Sampling frequency | 1.92 MHz (3.84/2 MHz) | 3.84 MHz | *7.68 MHz (2 × 3.84 MHz)* | *15.36 MHz (4× 3.84 MHz)* | *23.04 MHz (6 × 3.84 MHz)* | *30.72 MHz (8 × 3.84 MHz)* |
|---|---|---|---|---|---|---|
| FFT size | 128 | 256 | *512* | *1024* | *1536* | *2048* |
| Number of occupied sub-carriers | 76 | 151 | *301* | *601* | *901* | *1201* |

It should be understood however that the present invention is not limited to the particular exemplary bandwidths and UE capabilities described above but may be applicable generally to networks having scalable transmission bandwidths and UEs of differing reception bandwidth.

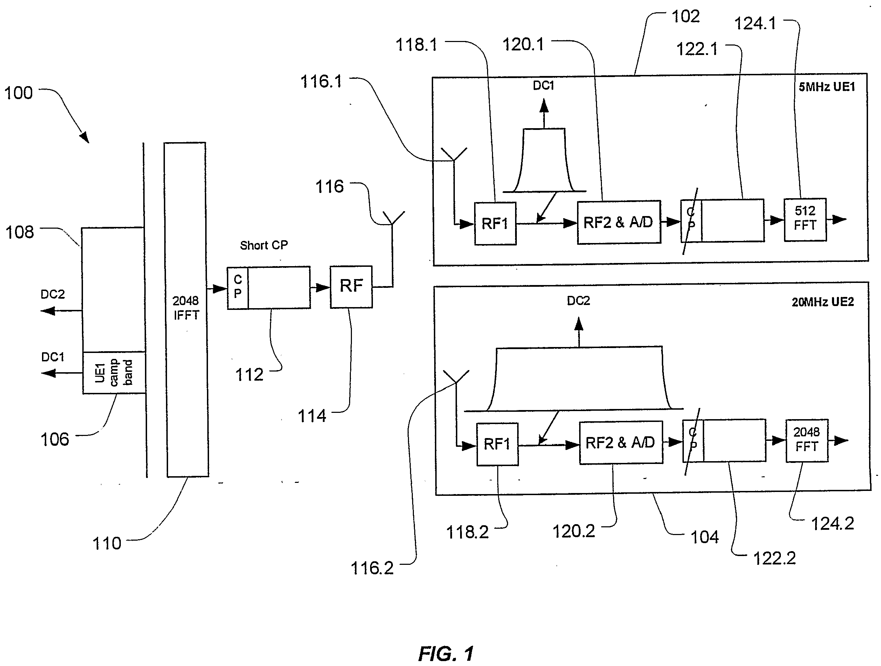

Figure 1 depicts a schematic representation of a base station transmitter 100 operating in accordance with an embodiment of the present invention. In the present embodiment the base station 100 is transmitting to two UEs 102 and 104. UE 102 has 5 MHz reception bandwidth and UE 104 has 20 MHz reception bandwidth.

In order to transmit to two UEs at the same transmission time interval (TTI) the base station 100 needs to multiplex the signals to be transmitted. In the preferred embodiment multiplexing is implemented in the frequency domain prior to conversion of the entire frequency multiplexed signal into time domain signal, using a single IFFT block 110.

The multiplexing scheme used in this embodiment is relatively simple, with the transmission bandwidth being split into two blocks of sub-carriers 106 and 108, wherein the data for the UE1 102 is multiplexed on a block of 301 consecutive sub-carriers centred at DC1 and the data for the UE2 104 is multiplexed on the remaining block 900 sub-carriers. It should be noted that the signal for UE2 is 1201 sub-carriers wide and is centred at DC2.

It should also be noted that different multiplexing schemes can be used, for example, schemes that assignments sub-carriers between the UEs such that they are interleaved, so long as the sub-carriers carrying data for a particular UE are contained within a pass-band less than or equal to the maximum reception bandwidth of the UE.

In the event that additional UEs were being transmitted to by the base station 100 the available transmission bandwidth could be further divided amongst UEs so long as the sub-carriers assigned to a particular UE are contained within a pass-band no greater than the maximum reception bandwidth of the UE.

Once the frequency domain multiplexing is of the UE data is performed, an inverse fast Fourier transform (IFFT) 110 is applied to the entire frequency band of the transmitter to generate a time domain signal. In the illustrative embodiment the IFFT applied is a 2048 point IFFT, however other IFFT sizes can be used depending upon the available bandwidth of the transmitter (see table 1 above). As discussed above only one IFFT is conducted across the entire set of sub carriers, rather than conducting separate IFFTs on each camping band. This simplifies base transceiver station design as only one IFFT block whose size is only dependent on transmitter bandwidth is needed for each transmitter antenna.

As is typical to OFDMA systems, next a cyclic prefix is added to the time domain signal in a manner that will be known to those skilled in the art at 112. This signal then undergoes further processing at 114 prior to transmission by a base station antenna 116. The transmitted signal is then received by each of the UEs 102 and 104.

Prior to discussing the processing of the signals received by the UEs 102 and 104 it is useful to briefly discuss the operation of the UEs, and in particular how they may transition between an idle state and an active state.

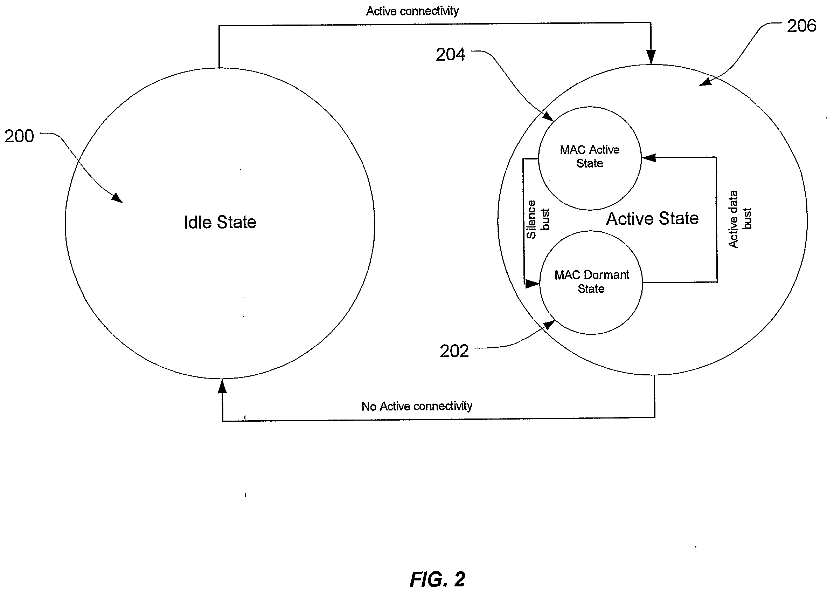

As will be known to those skilled in the art for much of the time a UE will exist in an idle state in which it performs very little or no transmission and/or reception. In such a state the UE will typically remain tuned to a particular frequency band, which will be referred to herein as a camping band. The idle state is indicated in Figure 2 as state 200. From time to time a UE will need to move into an active state 206, e.g. to make a call or send or receive other data. The active states are split into the MAC-Dormant or MAC-Active states and are indicated on figure 2 by reference numerals states 202 and 204 in Figure 2. The MAC-Active state 204 is used when data transmission and or reception is rather active, whereas the MAC-Dormant state 202 is used when UE transmission and or reception activity is temporarily terminated.

When a UE is in an idle state, it is necessary for it to regularly read the Broadcast Channel (BCH) for location area updates and other information as well as the Paging Channel (PCH). Additionally, when UEs are first attached to the network it will be necessary for the UE to receive synchronization channel and broadcast channel to obtain an initial time and frequency synchronization and cell search information from the network. In order to facilitate these processes, networks operating according to an embodiment of the present invention provide each of these channels in a single frequency band, referred as herein to the "common band". In the preferred embodiment the common band is aligned with the centre of the transmission band of the transmitter.

In order for each UE connected to the network to be able to receive all signals transmitted on the common band, the common band has a bandwidth of less than or equal to the maximum reception bandwidth of the lowest capacity UE operating in the network. In an embodiment using the assumptions stated above, this means that the synch channel, BCH, PCH and SCH are confined to a single 5 MHz frequency band.

To avoid UEs to having to unnecessarily change reception (or camping) bands and retune their receivers to receive the synch channel, BCH, PCH and SCH when necessary, preferred embodiments of the present invention require all UEs in an idle state to camp on the frequency band that encompasses the common band. In order not to have too many UEs operating in the common band (other than those in idle state, which consume little or no system resources), when a UE is requested to, or requests to, move into an active state, the network may request the UE to move to a different frequency band until it returns to an idle state.

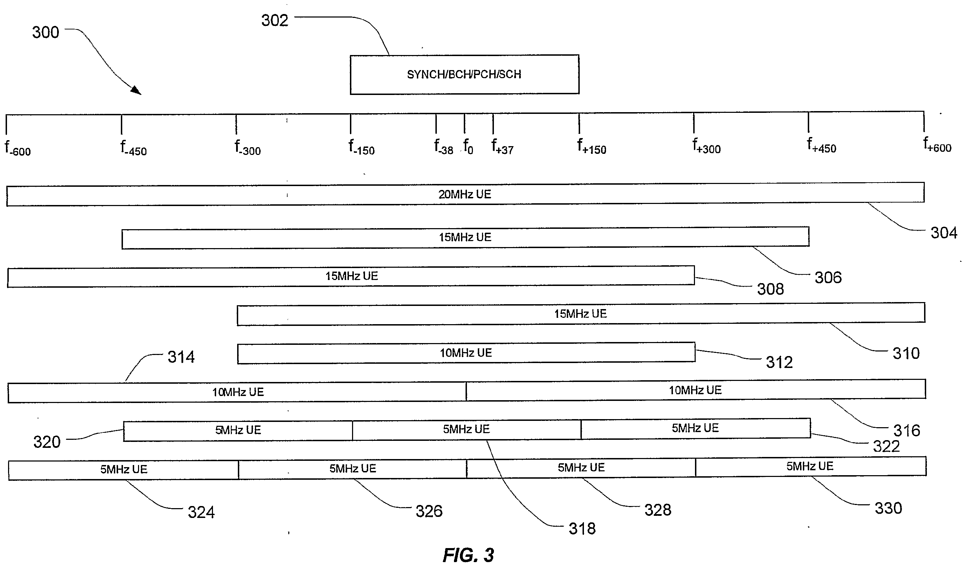

In order to better illustrate allocation of camping bands in networks with scalable transmitter and receiver bandwidth Figures 3, 4 and 5 illustrate exemplary band allocation possibilities for a 20 MHz bandwidth cell, 15 MHz bandwidth cell and 10 MHz bandwidth cell, respectively, for UEs having 5 MHz, 10 MHz, 15 MHz and 20 MHz reception bandwidth capability.

Figure 3 illustrates an exemplary band allocation scheme for a 20 MHz bandwidth cell for UEs having 5 MHz, 10 MHz, 15 MHz and 20 MHz reception bandwidths. The cell bandwidth is indicated by a frequency axis 300, which is gradated in sub-carriers (rather than in Hz) illustrating a 1201 sub-carrier frequency range from f₋₆₀₀ to f₊₆₀₀. Using the system parameters set out in Table 1 this can be seen to equate to a 20MHz transmission bandwidth. Block 302, which is centred on f₀, is the common band in which the synch channel, BCH, PCH and SCH of the cell is transmitted.

Bands 304 to 330 represent an exemplary set of bandwidth assignments for UEs operating in this 20MHz cell. Because the current cell has a transmission bandwidth of 20 MHz there is only one possible reception band of 20MHz, namely band 304. Because the bandwidth of the cell and Band 304 match, it is centred on f₀.

In this embodiment 3 possible 15MHz reception bands are defined, namely bands 306, 308 and 310, which are centred on frequencies f₀, f₋₁₅₀ and f₊₁₅₀ respectively. Because all of these bands 306, 308 and 310 encompass the common band 302, a 15MHz UE in either the idle state or active state can camp on one of these bands.

There are also three 10MHz bands defined, being bands 312, 314 and 316, centred on frequencies f₀, f₋₃₀₀ and f₊₃₀₀ respectively. Band 312 is the only 10 MHz band that encompass the common band 302, and hence is the only 10MHz band that may have 10MHz UEs in either an idle state or an active state camp on it. Only 10MHz UEs in an active state may camp one of the non-central 10 MHz bands 314 or 316.

There are seven 5MHz bands defined, being bands 318, 320, 322, 324, 326, 328 and 330, centred on frequencies f₀, f₋₃₀₀, f₊₃₀₀, f₋₄₅₀, f₋₁₅₀ f₊₁₅₀, and f₊₄₅₀ respectively. Band 318, centred on frequency f₀, is the only 5 MHz band that encompasses the common band 302, and hence is the only 5MHz band that may have 5MHz UE in either an idle state or an active state camped on it. Only 5MHz UEs in an active state may camp on one of the non-central 5 MHz bands 320 to 330. If any of the non-central 5 MHz bands 320 to 330 were to be used as camping band for a UE in an idle state, the UE would need to re-tune its receiver to the common band from time to time to receive the Broadcast Channel (BCH) for location area updates and other information, which is not desirable. The network would also have to be reconfigured to perform paging (and other signalling) outside the common band, which is also not desirable.

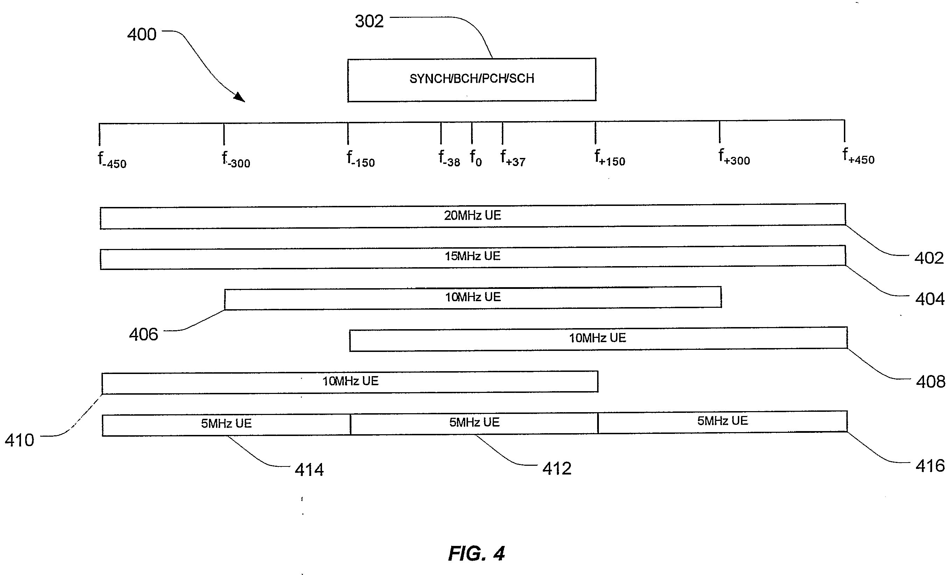

Figure 4 illustrates an exemplary band allocation scheme for a 15 MHz bandwidth cell for UEs having 5 MHz, 10 MHz, 15 MHz and 20 MHz reception bandwidths. The cell bandwidth is indicated by a frequency axis 400, which is gradated in sub-carriers (rather than in Hz) illustrating a 901 sub-carrier frequency range from f₋₄₅₀ to f₊₄₅₀. Using the system parameters set out in Table 1 this can be seen to equate to a 15MHz transmission bandwidth. As in Figure 3 block 302, which is centred on f₀, is the common band in which the synch channel, BCH, PCH and SCH of the cell is transmitted.

Bands 402 to 416 represent an exemplary set of bandwidth assignments for UEs operating in this 15MHz cell. Because the current cell has a transmission bandwidth of 15 MHz, UEs with reception bandwidths of both 20 MHz and 15 MHz have a reception band covering the entire transmission bandwidth of the cell, and are represented by bands 402 and 404, which are centred on f₀.

There are three 10MHz reception bands are defined, namely bands 406, 408 and 410, which are centred on frequencies f₀, f₋₁₅₀ and f₊₁₅₀ respectively. Because all of these bands 406, 408 and 410 encompass the common band 302, a 10MHz UE in either an idle state or an active state can camp on one of these bands.

There are also three 5MHz bands defined, being bands 412, 414 and 416, centred on frequencies f₀, f₋₃₀₀ and f₊₃₀₀ respectively. Band 412 is the only 5 MHz band that encompasses the common band 302, and hence is the only 5MHz band that may have 5MHz UEs in either an idle state or an active state camped on it. Only 5MHz UE in active state may camp on one of the non-central 5 MHz bands 414 or 416.

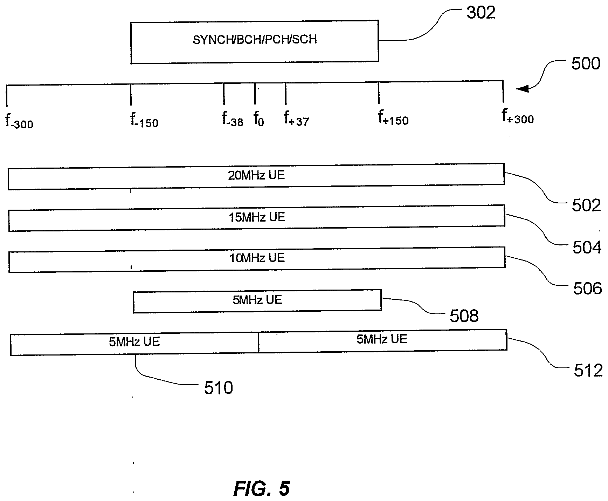

Figure 5 illustrates an exemplary band allocation scheme for a 10 MHz bandwidth cell for UEs having 5 MHz, 10 MHz, 15 MHz and 20 MHz reception bandwidths. The cell bandwidth is indicated by a frequency axis 500, which is gradated in sub-carriers (rather than in Hz) illustrating a 601 sub-carrier frequency range from f₋₃₀₀ to f₊₃₀₀. Using the system parameters set out in Table 1 this can be seen to equate to a 10MHz transmission bandwidth. As in Figures 3 and 4 block 302, which is centred on f₀, is the common band in which the synch channel, BCH, PCH and SCH of the cell is transmitted.

Bands 502 to 512 represent an exemplary set of bandwidth assignments for UEs operating in this cell. Because the current cell has a transmission bandwidth of 10 MHz, UEs with reception bandwidths of 20 MHz, 15 MHz and 10 MHz have a reception band covering the entire transmission bandwidth of the cell, and are represented by bands 502, to 506, which are centred on f₀.

There are three 5MHz reception bands defined, namely bands 508, 510 and 512, which are centred on frequencies f₀, f₋₁₅₀ and f₊₁₅₀ respectively. Band 508 is the only 5 MHz band that encompasses the common band 302, and hence is the only 5MHz band that a 5MHz UE in either an idle state or an active state may camp on. Only 5MHz UEs in active state may camp on one of the non-central 5 MHz bands 510 or 512.

Using Figure 3 as an example, when a UE initiates a request to be moved to the Active state (for example: to update its location, to initiate call or to respond to a page), it uses the Random Access Channel (RACH) in the uplink and will receive a response on the Shared Channel (SCH) in the downlink within the common band. In the event that a UE needs to change from the Idle to the Active state the system will order the UE to tune to a non-centre band, e.g. bands 320, 322, 324, 326, 328 or 330 if the UE is a 5MHz UE, or bands 314 or 316 if it is has a 10MHz reception bandwidth. This is done to reduce load on the common band 302. In this state the UE will monitor the shared control channel (SCCH) to receive the shared data channel (SDCH) in that non-centre band. In preferred embodiments UEs will move (or shall be moved) back to the Idle state, in which they will camp on a central band encompassing the common band, when there is no connectivity.

Returning now to Figure 1, the process of reception of the signal transmitted by BTS 100, by the two UEs 102 and 104, will be described. In order to receive the transmitted signal, each of the UEs 102 and 104 tunes its carrier frequency to appropriate central frequency, i.e. DC1 for UE1 102 and DC2 for UE2 104. Because of the reception bandwidth restrictions of UE1 102, only a 5MHz portion of the entire 20MHz transmitted bandwidth is received by UE1 102 using RF block 118.1. Conversely, because UE2 104 has a 20 MHz reception bandwidth all of the transmitted bandwidth is received (using RF block 118.2), including the portion of the transmitted signal that is intended to be transmitted only to UE1 (i.e. the signal multiplexed on sub-carrier block 106).

Next the received signals undergo further RF processing and analogue to digital conversion in blocks 120.1 and 120.2, in UEs 102 and 104 respectively. As can be seen from table 1, in the preferred embodiments the sampling frequency of digital samples at the output of block 120.1 and 120.2 is 7.68MHz and 30.72MHz. The cyclic prefix is then removed in blocks 122.1 and 122.2, in UEs 102 and 104.

Both UEs then perform an FFT (124.1 and 124.2 in UEs 102 and 104 respectively) to convert the time domain signal into a frequency domain signal. Because of the radio tuning step performed initially, the size of the FFT performed is dictated by the reception bandwidth of the UE, and not by the position of the desired sub-carriers within cell transmission band. As can be seed from Table 1, UE1 will use always 512 point FFT, because it has a 5MHz reception bandwidth and is seeking to extract 301 desired sub-carriers, In order to simplify the UE the size of the FFT performed is not dependent on whether or not other UEs have data multiplexed on the RF signal. Accordingly, UE2 will use always 2048 point FFT, because it has a 20MHz reception bandwidth. Signalling data or other means can then be used to tell UE2 to discard (or not decode) data on the sub-carriers transmitted in frequency block 106.

The present invention should not be construed as being limited to the reception, common and camping bands described herein, as the definition of such bands described above is somewhat arbitrary. More (or less) bands could be defined. For example in the 20MHz bandwidth cell, 15 MHz bands could be defined with any central frequency between f₋₁₅₀ and f₊₁₅₀. Similarly 10MHz bands could be defined with centre frequencies anywhere between f₋₃₀₀ and f₊₃₀₀. Also the common band could be defined at any point along the bandwidth of the cell. Notwithstanding this the illustrative bands described herein are considered to be an advantageous in so far as they minimise overlap of bands and thus minimise signalling and design complexity. They also provide enough flexibility for system to efficiently manage resource allocation to a large number of UEs of different capability to use the same cell transmission bandwidth simultaneously. Moreover, the definition of transmission and reception bands, and the mapping of physical channel (such as SCCH, SDCH and pilot) are advantageous in that any UE shall see only one mapping regardless of which band it is camping on. This is desirable since this will significantly reduces UE implementation complexity.

It will be understood that the invention disclosed and defined in this specification extends to all alternative combinations of two or more of the individual features mentioned or evident from the text or drawings. All of these different combinations constitute various alternative aspects of the invention.

## Claims

1. A method of operating a base station (100) in a radio communications network having differing transmission bandwidth, to enable communication with a plurality of user equipments, UEs, (102, 104) having different reception capabilities, at least one of which (102) has a maximum reception bandwidth that the UE (102) can support and being the lowest reception capability in the network, the method comprising the steps of:
allocating a single frequency band (302) as common band having bandwidth equal to or less than the smallest reception bandwidth of the UE (102) among the plurality of UEs (102, 104) in the network; and
transmitting on the common band, to one or more UEs (102, 104) of the plurality of UEs, channels including a broadcast channel, a paging channel, a synchronization channel and a shared channel, wherein all of said plurality of UEs (102, 104) remain tuned to the common band as a camping band when they exist in an idle state.

2. The method according to claim 1, wherein said common band is aligned with the center of the transmission band of a transmitter of the base station (100).

3. The method according to claim 2, further comprising the step of:
requesting, when the UE moves into an active state, the UE to tune to a non-center band of the transmission band of the transmitter until it returns to the idle state.

4. A system of a radio telecommunications network having differing transmission bandwidth, the system comprising:
a plurality of user equipments, UEs, (102, 104) having different reception capabilities, at least one of which (102) has a maximum reception bandwidth that the UE (102) can support and being the lowest reception capability in the network;
a base station (100) which is arranged to allocate a single frequency band (302) as common band having bandwidth equal to or less than the smallest reception bandwidth of the UE (102) among; the plurality of UEs (102, 104) in the network, and to transmit on the common band, to one or more UEs of the plurality of UEs (102, 104), channels including a broadcast channel, a paging channel, a synchronization channel and a shared channel, wherein all of said plurality of UEs (102, 104) remain tuned to the common band as a camping band when they exist in an idle state.

5. The system according to claim 4,
wherein said common band is aligned with the center of the transmission band of a transmitter of the base station (100).

6. The system according to claim 5,
wherein said base station is further arranged to request, when the UE moves into an active state, the UE to tune to a non-center band of the transmission band of the transmitter until it returns to the idle state.

7. The system according to claim 6,
wherein, when the UE initiates a request to be moved to the active state, the UE is configured to use a random access channel in an uplink and configured to receive a response on the shared channel in a downlink within the common band.

8. The system according to claim 6,
wherein, when the UE exists in the active state, the UE is configured to monitor the shared control channel to receive the shared data channel in the non-center band.

## Patentansprüche

1. Verfahren zum Betreiben einer Basisstation (100) in einem Funkkommunikationsnetz, das verschiedene Übertragungsbandbreiten aufweist, zum Ermöglichen einer Kommunikation mit mehreren Benutzergeräten, UEs, (102, 104) mit verschiedenen Empfangsleistungsfähigkeiten, von denen mindestens eines (102) eine maximale Empfangsbandbreite aufweist, die das UE (102) unterstützen kann und die die geringste Empfangsleistungsfähigkeit im Netz ist, wobei das Verfahren die folgenden Schritte aufweist:
Zuweisen eines einzelnen Frequenzbandes (302) als gemeinsames Band mit einer Bandbreite, die kleiner oder gleich der kleinsten Empfangsbandbreite des UEs (102) ist, unter den mehreren UEs (102, 104) im Netz; und
Übertragen von Kanälen, die einen Rundfunkkanal, einen Paging-Kanal, einen Synchronisationskanal und einen gemeinsam genutzten Kanal aufweisen, an ein oder mehrere UEs (102, 104) der mehreren UEs über das gemeinsame Band,
wobei alle der mehreren UEs (102, 104) auf das gemeinsame Band als ein Camping-Band abgestimmt bleiben, wenn sie sich in einem Ruhezustand befinden.

2. Verfahren nach Anspruch 1, wobei das gemeinsame Band mit der Mitte des Übertragungsbandes eines Senders der Basisstation (100) ausgerichtet ist.

3. Verfahren nach Anspruch 2, ferner mit dem Schritt:
Auffordern des UE, sich auf ein Nicht-Mittenband des Übertragungsbandes des Senders abzustimmen, bis es in den Ruhezustand zurückkehrt, wenn das UE auf einen aktiven Zustand schaltet.

4. System eines Funktelekommunikationsnetzes mit verschiedenen Übertragungsbandbreiten, wobei das System aufweist:
mehrere Benutzergeräte, UEs, (102, 104) mit verschiedenen Empfangsleistungsfähigkeiten, von denen mindestens eines (102) eine maximale Empfangsbandbreite hat, die das UE (102) unterstützen kann und die geringste Empfangsleistungsfähigkeit im Netz ist;
eine Basisstation (100), die dazu eingerichtet ist, ein einzelnes Frequenzband (302) als gemeinsames Band mit einer Bandbreite, die kleiner oder gleich der kleinsten Empfangsbandbreite des UE (102) ist, unter den mehreren UEs (102, 104) im Netz zuzuweisen, und Kanäle, die einen Rundfunkkanal, einen Paging-Kanal, einen Synchronisationskanal und einen gemeinsam genutzten Kanal aufweisen, über das gemeinsame Band an ein oder mehrere UEs der mehreren UEs (102, 104) zu übertragen, wobei alle der mehreren UEs (102, 104) auf das gemeinsame Band als Camping-Band abgestimmt bleiben, wenn sie sich im Ruhezustand befinden.

5. System nach Anspruch 4, wobei das gemeinsame Band mit der Mitte des Übertragungsbandes eines Senders der Basisstation (100) ausgerichtet ist.

6. System nach Anspruch 5, wobei die Basisstation ferner dazu eingerichtet ist, das UE aufzufordern, sich auf ein Nicht-Mittenband des Übertragungsbandes des Senders abzustimmen, bis es in den Ruhezustand zurückkehrt, wenn das UE auf einen aktiven Zustand schaltet.

7. System nach Anspruch 6,
wobei, wenn das UE eine Anforderung ausgibt, auf einen aktiven Zustand geschaltet zu werden, das UE dazu eingerichtet ist, einen Direktzugriffskanal in einem Uplink zu verwenden, und dafür konfiguriert ist, eine Antwort über den gemeinsam genutzten Kanal in einem Downlink innerhalb des gemeinsamen Bandes zu empfangen.

8. System nach Anspruch 6,
wobei, wenn das UE sich im aktiven Zustand befindet, das UE dafür konfiguriert ist, den gemeinsam genutzten Steuerkanal zu überwachen, um den gemeinsam genutzten Datenkanal im Nicht-Mittenband zu empfangen.

## Revendications

1. Procédé de commande d'une station de base (100) dans un réseau de radiocommunications ayant une largeur de bande de transmission différente, pour permettre une communication avec une pluralité d'équipements utilisateur, UE, (102, 104) ayant des capacités de réception différentes, dont au moins l'un (102) a une largeur de bande de réception maximale que l'UE (102) peut prendre en charge et étant la capacité de réception la plus basse dans le réseau, le procédé comprenant les étapes consistant à :
attribuer une bande à une seule fréquence (302) en tant qu'une bande commune ayant une largeur de bande égale ou inférieure à la largeur de bande de réception la plus basse de l'UE (102) parmi la pluralité d'UE (102, 104) dans le réseau ; et
transmettre sur la bande commune, à un ou plusieurs UE (102, 104) de la pluralité d'UE, des canaux incluant un canal de diffusion, un canal de radiomessagerie, un canal de synchronisation, et un canal partagé,
dans lequel tous les UE de ladite pluralité d'UE (102, 104) restent branchés sur la bande commune en tant qu'une bande de résidence lorsqu'ils existent dans un état de veille.

2. Procédé selon la revendication 1, dans lequel ladite bande commune est alignée avec le centre de la bande de transmission d'un émetteur de la station de base (100).

3. Procédé selon la revendication 2, comprenant en outre l'étape consistant à :
demander, lorsque l'UE passe dans un état actif, à l'UE de se régler sur une bande non centrale de la bande de transmission de l'émetteur jusqu'à ce qu'il retourne à l'état de veille.

4. Système d'un réseau de radiocommunications ayant une largeur de bande de transmission différente, le système comprenant :
une pluralité d'équipements utilisateur, UE, (102, 104) ayant des capacités de réception différentes, dont au moins l'un (102) a une largeur de bande de réception maximale que l'UE (102) peut prendre en charge et étant la capacité de réception la plus basse dans le réseau ;
une station de base (100) qui est agencée pour attribuer une bande à une seule fréquence (302) en tant qu'une bande commune ayant une largeur de bande égale ou inférieure à la largeur de bande de réception la plus basse de l'UE (102) parmi la pluralité d'UE (102, 104) dans le réseau, et pour transmettre sur la bande commune, à un ou plusieurs UE de la pluralité d'UE (102, 104), des canaux incluant un canal de diffusion, un canal de radiomessagerie, un canal de synchronisation, et un canal partagé,
dans lequel tous les UE de ladite pluralité d'UE (102, 104) restent branchés sur la bande commune en tant qu'une bande de résidence lorsqu'ils existent dans un état de veille.

5. Système selon la revendication 4,
dans lequel ladite bande commune est alignée avec le centre de la bande de transmission d'un émetteur de la station de base (100).

6. Système selon la revendication 5,
dans lequel la station de base est agencée en outre pour demander, lorsque l'UE passe dans un état actif, à l'UE de se régler sur une bande non centrale de la bande de transmission de l'émetteur jusqu'à ce qu'il retourne à l'état de veille.

7. Système selon la revendication 6,
dans lequel, lorsque l'UE initie une demande de passage à l'état actif, l'UE est configuré pour utiliser un canal d'accès aléatoire dans une liaison montante et configuré pour recevoir une réponse sur le canal partagé dans une liaison descendante à l'intérieur de la bande commune.

8. Système selon la revendication 6,
dans lequel, lorsque l'UE existe dans l'état actif, l'UE est configuré pour surveiller le canal de commande partagé pour recevoir le canal de données partagé dans la bande non centrale.
